# EUROPÄISCHE PATENTSCHRIFT

(11) **EP 2 646 291 B1**
(45) Veröffentlichungstag und Bekanntmachung des Hinweises auf die Patenterteilung: **02.09.2015**
(21) Anmeldenummer: 11779432.1
(22) Anmeldetag: 08.11.2011
(51) Int. Cl.: B60S 1/16, B60S 1/58

(54) **SCHEIBENWISCHVORRICHTUNG**
WINDSHIELD WIPER DEVICE
DISPOSITIF D'ESSUIE-GLACE

(30) Priorität: 02.12.2010 DE 102010062314
(43) Veröffentlichungstag der Anmeldung: 09.10.2013
(73) Patentinhaber: Robert Bosch GmbH, 70442 Stuttgart (DE)
(72) Erfinder: REITH, Michael, 77815 Buehl-Vimbuch (DE); FRIDERICHS, Guenther, 77836 Rheinmuenster (DE); STERNS, Orlando, 76228 Karlsruhe (DE); GEUBEL, Paul, 76534 Baden-Baden (DE)
(86) Internationale Anmeldenummer: PCT/EP2011/069647
(87) Internationale Veröffentlichungsnummer: WO 2012/072381

(56) Entgegenhaltungen:
- DE-A1-102006 042 322
- DE-A1-102009 002 842
- FR-A1- 2 940 217

## Beschreibung

Die vorliegende Erfindung betrifft eine Scheibenwischvorrichtung mit einem Wischerantrieb, insbesondere für Heckscheibenwischer eines Kraftfahrzeuges, mit einem mittels eines Gehäusedeckels verschließbaren Getriebegehäuse zur Aufnahme einer Getriebeanordnung, wobei das Getriebegehäuse und der Gehäusedeckel jeweils eine andere Fläche zur axialen Führung der Getriebeanordnung aufweisen, wobei die Getriebeanordnung zur Übertragung einer rotatorischen Bewegung des Wischermotors in eine oszillierende Drehbewegung der Abtriebswelle ein Schneckenrad aufweist, welches über einen sich axial an den Anlaufflächen abstützenden Lagerbolzen mit einer Schubstange drehbar verbunden ist.

Derartige Scheibenwischvorrichtungen sind allgemein bekannt und beispielsweise in der DE 10 2006 042 322 A1 beschrieben. Konkret beschreibt dieses Dokument eine Scheibenwischvorrichtung, die ein Getriebegehäuse aufweist, in welchem eine Getriebeanordnung aufgenommen ist. Die Getriebenanordnung ist als Umsetzgetriebe ausgebildet und weist eine Schubstange auf, die gelenkig mit einem Schneckenrad verbunden ist. Das Schneckenrad wird über einen Wischerantrieb derart angetrieben, dass es eine kontinuierliche Rotationsbewegung ausführt, welche mittels der exzentrischen Gelenkverbindung zwischen der Schubstange und dem Schneckenrad in eine Hub-Pendelbewegung umgesetzt wird. Das Schneckenrad und die Schubstange sind über einen VerbindungsLagerbolzen drehgelenkig verbunden. Zur Stabilisierung dieser drehgelenkigen Verbindung sind an dem Getriebegehäuse und dem Getriebegehäusedeckel Anlaufflächen vorgesehen, an denen sich der Lagerbolzen axial abstützen kann.

Das Schneckenrad und die Schubstangen befinden sich jedoch in dem Getriebe nicht in einer Kraftübertragungsebene sondern sind zueinander höhenversetzt. Dies führt jedoch dazu, dass nicht nur Axialkräfte auf den Lagerbolzen einwirken sondern auch Radialkräfte dazu führen, dass sich Schubstange und Schneckenrad zueinander verschieben können, was zu einem gewissen Spiel in dem Umsetzgetriebe führen kann. Dies wirkt sich jedoch negativ auf eine Wischwinkelgenauigkeit des durch den Wischerantrieb angetriebenen Wischerarms auf Windschutzscheibe des Kraftfahrzeuges während des Motorbetriebs aus.

Dokument DE 10 2009 002 842 A offenbart eine Scheibenwischvorrichtung gemäß dem ersten Teil des Anspruchs 1.

Es ist daher Aufgabe der vorliegenden Erfindung, eine Scheibenwischvorrichtung bereitzustellen, die das Motorspiel bzw. das Spiel in der Getriebeanordnung verringert.

### Offenbarung der Erfindung

Diese Aufgabe wird erfindungsgemäß dadurch gelöst, dass zur Aufnahme von Radialkräften ein Radialführungselement an dem Lagerbolzen und/oder an der Schubstange befestigt oder befestigbar ist.

### Vorteile der Erfindung

Durch Aufschieben eines Radialführungselements auf den Lagerbolzen wird erreicht, dass auf den Lagerbolzen wirkende Radialkräfte von dem Radialführungselement aufgenommen und über das Schneckenrad bzw. die Getriebeanordnung an das Getriebegehäuse weitergegeben werden können. So kann erfolgreich einem Kippen der Schubstange oder des Schneckenrads entgegengewirkt werden.

Zur Befestigung des Radialführungselements an dem Lagerbolzen kann das Radialführungselement eine Öffnung oder Vertiefung aufweisen, in die der Lagerbolzen einsetzbar ist.

Aufgrund der Rotationsbewegung des Schneckenrades und des darin exzentrisch gelagerten Lagerbolzens bietet es sich an, das Radialführungselement rotationssymmetrisch, insbesondere zylindrisch auszubilden.

Um die Verbindung zwischen Schneckenrad und Schubstange noch weiter zu stabilisieren, ist in einem Ausführungsbeispiel der Erfindung vorgesehen, das Radialführungselement mit Führungsstegen zu versehen, zwischen welchen die Schubstange aufgenommen werden kann.

Eine Möglichkeit, das Radialführungselement verkippsicher an dem Schneckenrad zu befestigen, besteht darin, zur Positionierung und Abstützung des Radialführungselements an dem Schneckenrad mindestens einen Vorsprung an dem Radialführungselement auszubilden, der sich an dem Schneckenrad abstützt oder in mindestens eine an dem Schneckenrad ausgebildete Vertiefung oder Aussparung einsetzbar ist.

Um das Gewicht der Scheibenwischvorrichtung möglichst gering zu halten, ist es in einem weiteren Ausführungsbeispiel der vorliegenden Erfindung vorgesehen, das Radialführungselement aus Kunststoff auszubilden.

Ferner kann zur weiteren Gewichtsreduktion das Radialführungsführungselement als Hohlkappe ausgebildet sein.

Natürlich ist es auch möglich, ein weiteres Radialführungselement an einen mit dem Zahnsegment der Getriebeanordnung verbundenen Abschnitt der Schubstange vorzusehen, um auch hier eine Stabilisierung der Verbindung zwischen Zahnsegment und Schubstange durch die Möglichkeit der Aufnahme von Radialkräften herbeizuführen.

Auch hier bietet es sich an, das Radialführungselement auf einen in die Schubstange zur Schaffung einer drehgelenkigen Verbindung mit dem Zahnsegment eingesetzten Lagerbolzen aufzuschieben.

Ein besonders geringes Motorspiel in der Getriebeanordnung ergibt sich, wenn ein zwischen dem Getriebegehäuse und dem Getriebedeckel gebildeter Einbaubereich von Getriebeanordnung und des Radialführungselements gemeinsam gebildeten Höhe entspricht.

Um einem Verkippen des Radialführungselements an dem Schneckenrad bzw. dem Zahnsegment entgegenzuwirken, ist in einem weiteren Ausführungsbeispiel vorgesehen, die an dem Getriebedeckel ausgebildete Anlauffläche korrespondierend zu der der Anlauffläche zugewandten Oberfläche des Radialführungselements auszubilden.

Die oben beschriebene Ausbildung von Radialführungselement und/oder Anlauffläche ist besonders geeignet, wenn die Getriebeanordnung als Umsetzgetriebe ausgebildet ist.

Hinsichtlich weiterer vorteilhafter Ausgestaltungen der Erfindung wird auf die Erläuterung der beigefügten Zeichnungen sowie die Unteransprüche verwiesen.

### Kurze Beschreibung der Zeichnungen

Es zeigen:
- Figur 1: eine perspektivische Teildarstellung einer erfindungsgemäßen Scheibenwischvorrichtung mit und ohne eingesetztem Radialführungselement; und
- Figur 2: eine perspektivische Darstellung eines erfindungsgemäßen Radialführungselement.

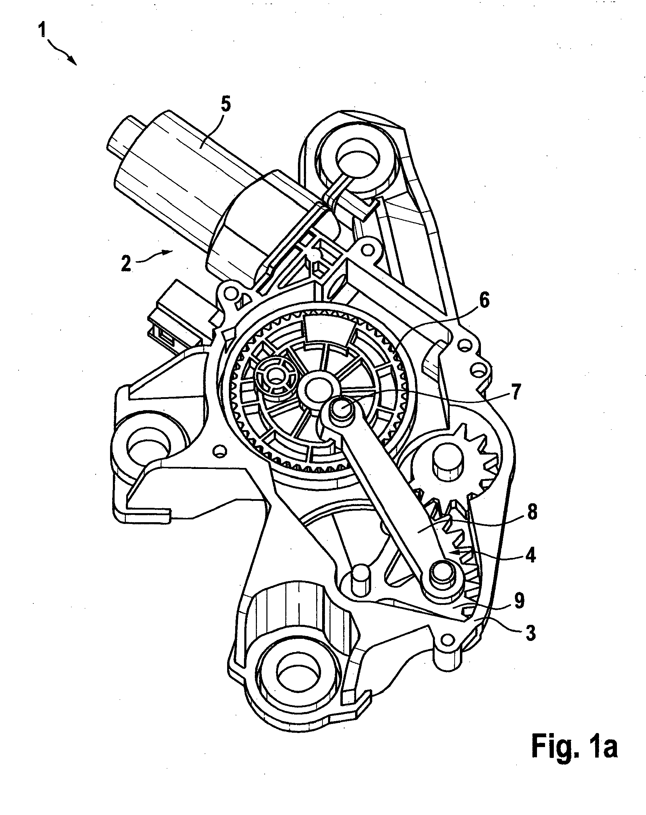

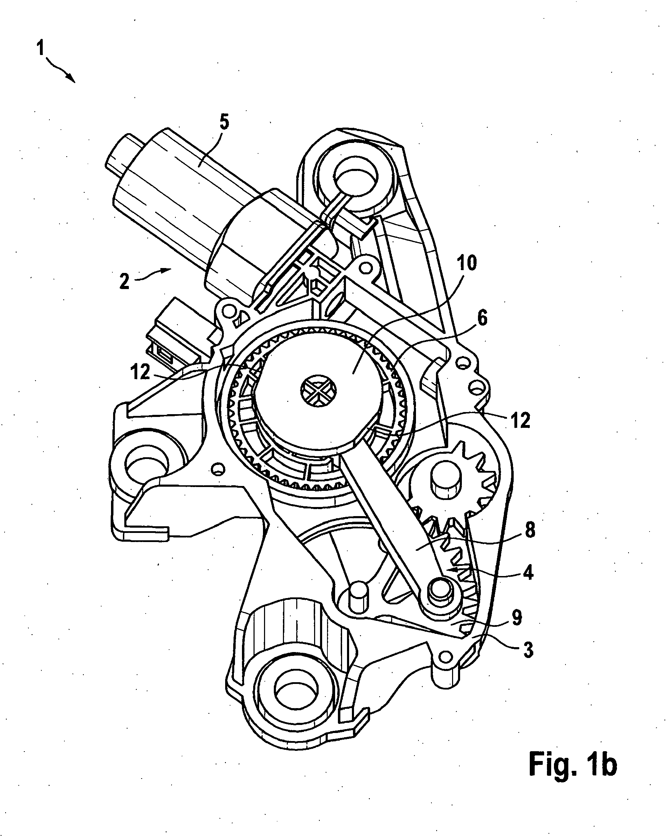

Die Figuren 1a und 1b zeigen eine perspektivische Darstellung einer erfindungsgemäßen Scheibenwischvorrichtung 1. Die Scheibenwischvorrichtung 1 umfasst einen Wischerantrieb 2 für einen Heckscheibenwischer eines Kraftfahrzeuges mit einem mittels eines nicht darstellten Gehäusedeckels verschließbaren Getriebegehäuses 3. In dem Getriebegehäuse 3 ist eine Getriebeanordnung in der Form eines Umsetzgetriebes 4 aufgenommen, welche von einem Wischermotor 5 angetrieben wird.

Das Umsetzgetriebe 4 weist zur Übertragung einer rotatorischen Bewegung des Wischermotors 5 in eine oszillierende Drehbewegung einer nicht näher darstellten Abtriebswelle ein Schneckenrad 6 auf, welches über einen Lagerbolzen 7 mit einer Schubstange 8 drehgelenkig verbunden ist. Die Schubstange 8 ist über den Befestigungslagerbolzen 7 exzentrisch in dem Schneckenrad 6 gelagert.

Um eine pendelnde Bewegung des nicht dargestellten Wischerarms zu erzeugen, treibt der Wischermotor 5 eine nicht dargestellte Ankerwelle an, an der eine Schnecke ausgebildet ist, die wiederum mit einer an dem Schneckenrad ausgebildeten Stirnverzahnung kämmt. Somit führt das Schneckenrad 6 eine kontinuierliche Rotationsbewegung aus, die durch eine bezogen auf die Rotationsachse des Schneckenrades 6 exzentrische Gelenkverbindung zwischen der Schubstange 8 und dem Schneckenrad 6 in eine Hub-Pendelbewegung der Schubstange 8 überführt wird.

Die Hub-Pendelbewegung der Schubstange 8 wird über ein mit einem in dem Getriebegehäuse 3 gelagerten Zahnsegment 9 kämmendes an der Abtriebswelle angeordnetes Ritzel in eine Pendeldrehung der mit dem Ritzel drehverbundenen Abtriebswelle überführt, woraus sich eine pendelnde Bewegung des nicht dargestellten Wischerhebels einstellt. So kann durch den Einsatz des Umsetzgetriebes 4 aus einer rein rotatorischen Bewegung eine pendelnde Drehbewegung der Abtriebswelle um beispielsweise 180° erzeugt werden.

In den Figuren 1a und 1b ist deutlich zu sehen, dass das Schneckenrad in einer anderen Ebene liegt als die Schubstange 8. Dies ruft unweigerlich Quer- und Radialkräfte bei der Übertragung der Kraft von dem Schneckenrad 6 auf das Zahnsegment 9 und das Ritzel hervor. Zur Aufnahme dieser unerwünschten, ein Spiel in dem Umsetzgetriebe hervorrufenden Radialkräfte ist in Figur 1b ein zylindrisches Radialführungselement 10 auf das Schneckenrad 6 aufgeschoben. Die Radialkräfte wirken im Wesentlichen auf den BefestigungsLagerbolzen 7. Daher ist in dem Radialführungselement eine Öffnung oder Vertiefung ausgebildet, in die der Lagerbolzen 7 eingesetzt ist. So wird es möglich, dass auf den Lagerbolzen 7 wirkende Radialkräfte über das Radialführungselement 10 und das Schneckenrad 6 an das Getriebegehäuse 3 weitergeleitet werden. Auch wird die maximale Bewegungsrichtung von dem Schnekkenrad 6 relativ zu den Lagerbolzen 7 und der Schubstange 8 verringert und somit plastische Verformung bei Überlast vermieden. Auch das Motorspiel nimmt sichtbar ab, was zu einer besseren Wischwinkelgenauigkeit des Wischhebels auf der Windschutzscheibe während des Motorbetriebs führt. Die Radialführung ermöglicht ferner, dass eine durch Radialkräfte hervorgerufene Verkippung zwischen Schubstange 8 und Schneckenrad 6 bzw. wie in einem alternativen, nicht dargestellten Ausführungsbeispiel vorgesehen, zwischen Schubstange 8 und Zahnsegment 9 minimiert. Auch einer Verformung der für den Lagerbolzen 7 in das Stirnrad eingebrachten exzentrischen Bohrung wird so erfolgreich entgegengewirkt.

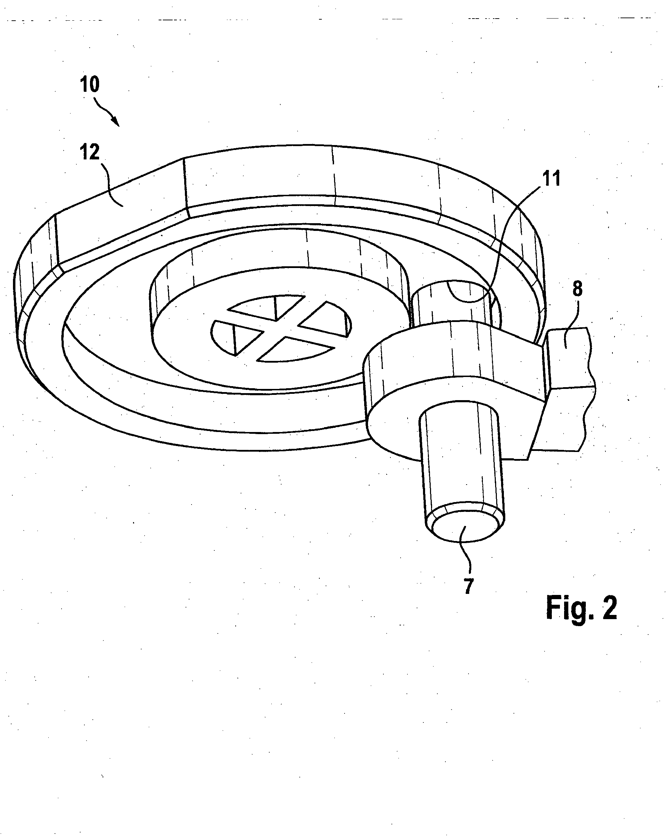

Ein Ausführungsbeispiel eines erfindungsgemäßen Radialführungselements 10 ist in der Figur 2 näher gezeigt und ist zur Reduzierung des Gewichtes als scheibenförmiger Hohlkörper aus Kunststoff ausgebildet und weist eine Öffnung 11 auf, in die der Lagerbolzen 7 eingesetzt ist, um eine drehgelenkige Verbindung zwischen dem Schneckenrad 6 und der Schubstange 8 bereitzustellen. Das Radialführungselement weist eine Form auf, die eine in dem nicht dargestellten Getriebedeckel ausgebildeten Anlauffläche korrespondierend ausgebildet ist. Zur Positionierung des Radialführungselements 10 in der Anlauffläche des Getriebedeckels und zur Weiterleitung der von dem Radialführungselement aufgenommenen Radialkräfte sind an dem Radialführungselement 10 Abflachungen 12 ausgebildet, die sich wiederum an dem Getriebedeckel abstützen und so zu einer weiteren Stabilisierung des Umsetzgetriebes beitragen.

## Patentansprüche

1. Scheibenwischvorrichtung (1) mit einem Wischerantrieb (2), insbesondere für Heckscheibenwischer eines Kraftfahrzeuges, mit einem mittels eines Gehäusedeckels verschließbaren Getriebegehäuse (3) zur Aufnahme einer Getriebeanordnung (4), wobei das Getriebegehäuse (3) und der Gehäusedeckel jeweils eine Anlauffläche zur axialen Führung der Getriebeanordnung (4) aufweisen, wobei die Getriebeanordnung (4) zur Übertragung einer rotatorischen Bewegung eines in dem Wischerantrieb (2) vorgesehenen Wischermotors (5) in eine oszillierende Drehbewegung der Abtriebswelle ein Schneckenrad (6) aufweist, welches über einen sich axial an den Anlaufflächen abstützenden Lagerbolzen (7) mit einer Schubstange (8) drehgelenkig verbunden ist, **dadurch gekennzeichnet, dass** zur Aufnahme von Radialkräften ein Radialführungselement (10) an dem Lagerbolzen (7) und/oder dem Schneckenrad (6), befestigt ist.

2. Scheibenwischvorrichtung (1) nach Anspruch 1, **dadurch gekennzeichnet, dass** das Radialführungselement eine Öffnung oder Vertiefung (11) aufweist, in die der Lagerbolzen (7) einsetzbar ist.

3. Scheibenwischvorrichtung (1) nach Anspruch 1 oder 2, **dadurch gekennzeichnet, dass** das Radialführungselement (10) rotationssymmetrisch, insbesondere zylindrisch ausgebildet ist.

4. Scheibenwischvorrichtung (1) nach einem der Ansprüche 1 bis 3, **dadurch gekennzeichnet, dass** das Radialführungselement (10) Führungsstege aufweist, zwischen welchen die Schubstange (8) aufgenommen werden kann.

5. Scheibenwischvorrichtung (1) nach einem der vorhergehenden Ansprüche, **dadurch gekennzeichnet, dass** zur Positionierung und Abstützung des Radialführungselements (10) an dem Schneckenrad (6) mindestens einen Vorsprung an dem Radialführungselement (10) vorgesehen ist, der sich an dem Schneckenrad (6) abstützt oder in mindestens eine an dem Schneckenrad (6) ausgebildete Vertiefung oder Aussparung einsetzbar ist.

6. Scheibenwischvorrichtung (1) nach einem der vorhergehenden Ansprüche, **dadurch gekennzeichnet, dass** das Radialführungselement (10) aus Kunststoff ist.

7. Scheibenwischvorrichtung (1) nach einem der vorhergehenden Ansprüche, **dadurch gekennzeichnet, dass** das Radialführungselement (10) als Hohlkappe ausgebildet ist.

8. Scheibenwischvorrichtung (1) nach einem der vorhergehenden Ansprüche, **dadurch gekennzeichnet, dass** ein weiteres Radialführungselement (10) an einem mit einem Zahnsegment (9) verbundenen Abschnitt der Schubstange (6) vorgesehen ist, insbesondere auf einen in die Schubstange (8) zur Schaffung einer drehgelenkigen Verbindung mit dem Zahnsegment (9) eingesetzten Lagerbolzen aufgeschoben ist.

9. Scheibenwischvorrichtung (1) nach einem der vorhergehenden Ansprüche, **dadurch gekennzeichnet, dass** ein zwischen dem Getriebegehäuse (3) und dem Getriebedeckel gebildeter Einbaubereich der von dem Getriebeanordnung (3) und dem Radialführungselement (10) gemeinsam gebildeten Höhe entspricht.

10. Scheibenwischvorrichtung (1) nach einem der vorhergehenden Ansprüche, **dadurch gekennzeichnet, dass** die an dem Getriebedeckel ausgebildete Anlauffläche korrespondierend zu der der Anlauffläche zugewandten Oberfläche des Radialführungselements (10) ausgebildet ist.

## Claims

1. Windscreen wiper device (1) with a wiper drive (2), in particular for rear window wipers of a motor vehicle, with a gear housing (3), which is closable by means of a housing cover, for accommodating a gear arrangement (4), wherein the gear housing (3) and the housing cover both have a stop face for the axial guidance of the gear arrangement (4), wherein the gear arrangement (4) has a worm gear (6) for transferring a rotary movement of a wiper motor (5), which is provided in the wiper drive (2), into an oscillating rotational movement of the output shaft, which worm gear (6) is connected in a hinged manner to a connecting rod (8) via a bearing pin (7) supported axially on the stop faces, **characterized in that**, in order to absorb radial forces, a radial guide element (10) is fastened to the bearing pin (7) and/or to the worm gear (6).

2. Windscreen wiper device (1) according to Claim 1, **characterized in that** the radial guide element has an opening or depression (11), into which the bearing pin (7) is insertable.

3. Windscreen wiper device (1) according to Claim 1 or 2, **characterized in that** the radial guide element (10) is of rotationally symmetrical, in particular cylindrical, design.

4. Windscreen wiper device (1) according to one of Claims 1 to 3, **characterized in that** the radial guide element (10) has guide webs, between which the connecting rod (8) can be accommodated.

5. Windscreen wiper device (1) according to one of the preceding claims, **characterized in that**, in order to position and support the radial guide element (10) on the worm gear (6), at least one projection is provided on the radial guide element (10), said projection being supported on the worm gear (6) or being insertable into at least one depression or recess formed on the worm gear (6).

6. Windscreen wiper device (1) according to one of the preceding claims, **characterized in that** the radial guide element (10) is made from plastic.

7. Windscreen wiper device (1) according to one of the preceding claims, **characterized in that** the radial guide element (10) is designed as a hollow cap.

8. Windscreen wiper device (1) according to one of the preceding claims, **characterized in that** a further radial guide element (10) is provided on a portion of the connecting rod (8) that is connected to a tooth segment (9), in particular is pushed onto a bearing pin, which is inserted into the connecting rod (8) in order to produce a hinged connection to the tooth segment (9).

9. Windscreen wiper device (1) according to one of the preceding claims, **characterized in that** an installation region formed between the gear housing (3) and the gear cover corresponds to the height jointly formed by the gear arrangement (4) and the radial guide element (10).

10. Windscreen wiper device (1) according to one of the preceding claims, **characterized in that** the stop face formed on the gear cover is designed in a manner corresponding to that surface of the radial guide element (10) which faces the stop face.

## Revendications

1. Dispositif d'essuie-glace (1) avec un entraînement d'essuie-glace (2), en particulier pour un essuie-glace de lunette arrière d'un véhicule automobile, avec un boîtier d'engrenages (3) pouvant être fermé au moyen d'un couvercle de boîtier, destiné à contenir un ensemble d'engrenages (4), dans lequel le boîtier d'engrenages (3) et le couvercle de boîtier présentent chacun une face d'arrêt pour la fixation axiale de l'ensemble d'engrenages (4), dans lequel l'ensemble d'engrenages (4) présente, pour la transmission d'un mouvement de rotation d'un moteur d'essuie-glace (5) prévu dans l'entraînement d'essuie-glace (2) en un mouvement de rotation oscillant de l'arbre de sortie, une roue à vis sans fin (6) qui est reliée par une articulation cylindrique à une bielle (8) au moyen d'un boulon de palier (7) s'appuyant axialement sur les faces d'arrêt, **caractérisé en ce qu'**un élément de guidage radial (10) est disposé sur le boulon de palier (7) et/ou la roue à vis sans fin (6) pour la reprise de forces radiales.

2. Dispositif d'essuie-glace (1) selon la revendication 1, **caractérisé en ce que** l'élément de guidage radial présente une ouverture ou un creux (11), dans laquelle/lequel le boulon de palier (7) peut être inséré.

3. Dispositif d'essuie-glace (1) selon la revendication 1 ou 2, **caractérisé en ce que** l'élément de guidage radial (10) présente la symétrie de révolution, et est en particulier de forme cylindrique.

4. Dispositif d'essuie-glace (1) selon l'une quelconque des revendications 1 à 3, **caractérisé en ce que** l'élément de guidage radial (10) présente des nervures de guidage, entre lesquelles la bielle (8) peut être logée.

5. Dispositif d'essuie-glace (1) selon l'une quelconque des revendications précédentes, **caractérisé en ce qu'**il est prévu pour le positionnement et l'appui de l'élément de guidage radial (10) sur la roue à vis sans fin (6) au moins une saillie sur l'élément de guidage radial (10), qui prend appui sur la roue à vis sans fin (6) ou qui peut être insérée dans au moins un creux ou une découpe formé (e) sur la roue à vis sans fin (6).

6. Dispositif d'essuie-glace (1) selon l'une quelconque des revendications précédentes, **caractérisé en ce que** l'élément de guidage radial (10) est en matière plastique.

7. Dispositif d'essuie-glace (1) selon l'une quelconque des revendications précédentes, **caractérisé en ce que** l'élément de guidage radial (10) est réalisé en forme de capuchon creux.

8. Dispositif d'essuie-glace (1) selon l'une quelconque des revendications précédentes, **caractérisé en ce qu'**il est prévu un autre élément de guidage radial (10) sur une partie de la bielle (8) reliée à un segment denté (9), qui est glissé en particulier sur un boulon de palier inséré dans la bielle (8) pour la création d'une liaison articulée rotative avec le segment denté (9).

9. Dispositif d'essuie-glace (1) selon l'une quelconque des revendications précédentes, **caractérisé en ce qu'**une région de montage formée entre le boîtier d'engrenages (3) et le couvercle d'engrenages correspond à la hauteur formée en commun par l'ensemble d'engrenages (4) et l'élément de guidage radial (10).

10. Dispositif d'essuie-glace (1) selon l'une quelconque des revendications précédentes, **caractérisé en ce que** la face d'arrêt formée sur le couvercle d'engrenages est formée de façon correspondante à la surface de l'élément de guidage radial (10) tournée vers la face d'arrêt.
